# EUROPEAN PATENT APPLICATION

(11) **EP 4 053 195 A1**
(43) Date of publication of application: **07.09.2022**
(21) Application number: 21020117.4
(22) Date of filing: 02.03.2021
(51) Int. Cl.: C08J 7/04, C08J 7/043, C09D 5/00

(54) **COATING PRODUCT FOR INSULATION BOARDS AND COATED INSULATION BOARD**

(71) Applicant: Termo Organika Sp. z o.o., 30-117 Kraków (PL)
(72) Inventor: STACHURA, Dariusz, 30-241 Krakow (PL); LAZECKI, Dariusz, 03-138 Warszawa (PL)
(74) Representative: Radlowski, Jakub

(57) **Abstract**

A protective and adhesion-enhancing coating product for insulation boards, based on water (18.92 - 41%) with the addition of calcium carbonate (39 - 44%), bonding dispersion (13 - 15%) advantageously in the form of polymer based on acrylic acid ester, styrene and vinylbenzene with an average molecule size < 0.1 µm; auxiliary dispersant, reticulating cellulose thickener (e.g. hydroxyethylcellulose), associative thickener (in particular, acrylic acid ester) and biocide. The product may contain titanium dioxide, pigments, dispersion in the form of small-molecule acrylic co-polymers and other additives such as antifoaming agent, hydrophobic agents, rheological additives, biocides, etc. The insulation board fabricated from foamed polystyrene having at least part of its surface covered with an adhesion-enhanced protective coating formed by a 0.1-0.5mm-thick layer of dry product containing 48.79 - 64.39% w/w mineral filler in the form of calcium carbonate; 16.26 - 21.45% w/w polymer based on acrylic acid ester, styrene and vinylbenzene, 0.12 - 0.18% w/w dispersant; 0.58 - 0.82% w/w coalescent; 0.52 - 0.75% w/w reticulating cellulose thickener; 0.09 - 0.74% associative thickener, particularly in the form of acrylic acid ester and up to 0.74% biocide. The board's coating may also contain other additives such as calcinated kaolin, small-molecule aqueous acrylic co-polymers, titanium white, pigments and biocides.

## Description

This invention pertains to a coating product for insulation boards, in particular insulation boards fabricated from expanded polystyrene, as well as to an insulation board covered with said coating product.

The state of the art knows solutions wherein insulation boards have a multilayered structure featuring a reflective outer layer or surface designed for protection against sunlight. Such outer layers or surfaces of insulation boards may serve the additional purpose of containing biocidal agents or providing extra protection against high temperature. This is particularly important for well-known and long-marketed graphite- or soot-containing grey expanded polystyrene boards (cf. EP0981574) that are more exposed to sunlight than white boards.

In a Swiss patent application published under No CH705855 entitled *"Thermal insulation board for heat insulation of exterior e.g. facade of building, has adhesive-free reflector and cover plates that are joined together in full surface nominal dimension of plate thickness"* there is known the insulation board with reflector plate and cover plate having protective function. The reflector plate is made of highly foamed insulation material and joined together with cover plate on full surface. The cover plate is provided with non-white polystyrene particles and pearls in form of graphite or other particles having athermanous effect. These non-white particles can have yellow or orange colour.

In a European patent application No. EP2204513 entitled "*Multi-layer heat insulating board and method for building a heat insulated facade"* there is disclosed the multi-layer thermal insulation plate having three layers (..) The inner layer of the three layers contains hydrophobic, fumed silica particles. The hydrophobic, pyrogenic silica particles are added with filaments and opacifiers. The insulating materials are mineral insulating materials or organic insulating materials such as foamed or extruded polystyrene, polyurethane, polyisocyanurate, phenolic foam or other suitable insulation material. Thickness of the layers may be between 5 and 300 mm.

The German application published under No. DE102009038320 entitled *"Insulating board for use at external facade for thermal insulation of e.g. kindergarten, has outer layer made of non inflammable mineral insulating material and inner layer made of flexible insulating material"* reveals an insulating board, in particular for the thermal insulation of buildings, having at least 2 layers. An outer layer made of a non-combustible, mineral insulating material (which may be e.g. mineral foam) and an inner layer of a flexible insulating material that may be polystyrene or other organic insulating material or mineral wool or other inorganic insulating material. The outer layer may be hydrophobic vapor diffusion-open layer.

In another publication No. WO0069624 entitled *"Extruded polystyrene foam insulation with high thermal resistance",* there's described a laminated insulating foam board comprising a panel of a plastic foam material (which can be foamed polystyrene, molded expanded polystyrene, polyisocyanurate foam etc.) and at least one facer on the surface, where the facer has an oxygen transmission rate of less than 10 cubic centimetre per 100 sq. inches/ 24 hours, and low elongation grade. The laminated insulating board can also include a gas barrier layer, having a normalized oxygen permeability. The film layer can be made of polypropylene, HDPE, polyethylene terephthalate, nylon, EVA copolymer, other thermoplastics or a vacuum deposited metal film that can be e.g. an aluminium film. The gas barrier may have dispersed plate-like fillers that constitute an oxygen barrier. The insulation according to said application should demonstrate higher thermal resistance comparing to standard insulating boards.

In turns, European patent application no. EP2647663 describes insulation board made of expanded polystyrene (EPS) that have insulation (reflector) layer and a cover layer. The cover layer may advantageously contain pigmented white, yellow or orange particles including atherman substances e.g. graphite. This cover layer may also contain fire-protecting, insect- and/or algae-protecting or sound proofing properties and higher heat resistance. However, there is not explained what technical means are being used in order to provide the insulation boards with such properties as fire-protection, insect-protection or soundproof attributes.

Also, solutions are known wherein a thin layer of styrofoam is glued onto a thicker graphite-containing styrofoam board. The board is installed with the white side facing out in order to ensure better reflection of sunlight and prevent the deformation of the insulating layer. This solution is used by Swisspor company (cf. http://swisspor.at/produkte/swissporlambda/swissporlambda-white.html). Swisspor has been granted protection for this kind of insulation boards as Polish designs No. Rp-22614 and Rp-22652.

The coating product according to the invention is a liquid substance designed to be applied onto insulation boards, in particular white, pigmented or dyed expanded polystyrene (EPS) boards, including those with added graphite or soot. The coating product according to the invention contains 18.92 - 41% w/w water as the main solvent, in which other substances together with the product's main supplement, i.e. 39 - 44% w/w calcium carbonate filler, are dispersed to form the final layer (thickness) of the coating on the insulation board. In addition, calcium carbonate also has advantageous properties with respect to reflection and dissipation of sunlight.

The product is also composed of 13 - 15% w/w bonding dispersion having the form of polymer based on acrylic acid ester, styrene and vinylbenzene with average molecule size < 0.1 µm. The bonding dispersion in conjunction with the filler forms a compact layer which, after drying, prevents the erosion of the filler dispersed within it. The dispersion acts as a barrier to air-borne compounds.

Additionally, the product contains 0.09 - 012% w/w dispersant that aids in the dispersion of solid substances within the liquid. The dispersant is advantageously sodium polyacrylate.

The product may also include 0.45 - 0.55% w/w coalescent, such as 2,2,4-trimethyl-1,3-pentanediol monoisobutyrate. The coalescent ensures correct reticulation of the bonding dispersion, thereby allowing the product to dry on the board's surface to form a uniform coating free from cracks or other defects.

Another component of the coating product is in-can biocide that prevents the growth of bacteria in the water contained within the product. The biocide makes up 0.4 - 0.6% w/w of the product. 2-methyl-2H-isothiazol-3-one or 1,2-benzisothiazol-3(2h)-one, or a mixture of these, can be used advantageously as in-can biocide.

Another component of the product is an anionic acrylic thickener (associative thickener), particularly in the form of acrylic acid ester, whose percentage content is 0.07 - 0,1% w/w. The associative thickener serves to stabilize the final product's viscosity. In the final phase of the process, it aids in skimming (removal of air molecules trapped when mixing/dispersing the components of the product).

The basic components of the product also include a reticulating thickener, advantageously a cellulose thickener, e.g. in the form of hydroxyethylcellulose. On contact with water, this component swells to expand a chain that forms the "network" in which the particulate matter of the solid fillers is suspended. The content of this component amounts to 0.4 - 0.5% w/w.

Also, other components may be used to improve the utility and application properties of the product.

In addition to bonding dispersion in the form of polymer based on acrylic acid ester, styrene and vinylbenzene, the product may contain 4.0 - 4.3% w/w dispersion in the form of small-molecule acrylic copolymers (molecule size no more than 50 nm).

Depending on water hardness, the product may contain 0.05 - 0.07% w/w water pH stabilizer such as sodium hexametaphosphate intended to bind calcium and magnesium ions.

The product may also contain a pH stabilizer such as potassium metasilicate in proportions of 0.03 - 0.05% w/w. This keeps the pH-value (quantity of H+ and OH- ions) constant. The presence of this component in the product is beneficial in that it shortens the expansion time of cellulose chains of the reticulating thickener.

A further component is the anti-foaming agent, such as fatty acid condensate in proportions of 0.08 - 0.12 % w/w. The anti-foaming agent releases the air trapped in the mixing process. This eliminates craters formed on the sites of air release as the coating dries.

The addition of titanium dioxide in proportions of 5.0 - 7.0% w/w improves coverage on the board and heightens the board's whiteness index. Even in the basic embodiment of the invention, the product-coated surface of an insulation board has a good sunlight reflection coefficient and dissipates incident solar radiation thanks to the application of a mineral filler such as calcium carbonate (characterized by white colour, high brightness and grain size below 0.045 mm). Since titanium dioxide is a fine-grained filler with a high whiteness index, as well as a good reflector and dissipator of solar radiation, its addition further enhances insulation board strength against sunlight. This may help to avoid the focal effect which, under specific conditions, may melt parts of the insulation under the combined impact of direct solar radiation and other reflected light. This phenomenon may be prevented to some extent by increasing the light dissipation coefficient.

The product composition, in addition to titanium dioxide, may include an optical filler made up of a mixture of titanium dioxide and calcium carbide at 2.2 - 2.5% w/w. This represents a cost-saving alternative to titanium white. Its incorporation ensures high-quality whiteness.

Research has shown that superior properties relating to light reflection and dissipation can also be obtained by dying the insulation board surface yellow, orange, yellow-and-orange or pink. Such a colour can be produced by enriching the product with pigments (including pigment pastes) or dyes, advantageously with indexes P.Y.110, P.R.168 or P.Y.74. The best reflecting efficiency is shown by some inorganic pigments (diiron trioxide, iron hydroxide, oxide yellow, bismuth vanadium tetroxide) and organic pigments: 1H-isoindolone or 4,10-dibromo-dibenzo[def,mno]chrysene-6,12-dione or [(2-methoxy-4-nitrophenyl)azo]-N-(2-methoxyphenyl)-3-oxobutyramide or their mixtures.

The above pigments should be added to the product advantageously in proportions of 1.95 to 2.0% w/w. They may be used in combination with the white filler or separately as the sole pigmenting additive in the product's basic composition.

The combined content of these pigmenting additives (including titanium dioxide and calcium carbonate) amounts advantageously to 9.15 - 11.5% w/w. Such a percentage allows obtaining the intended degree of light reflection while retaining adhesive properties.

Pigmenting additives in conjunction with the primary bonding material, small-molecule dispersion and dispersant additives, such as sodium polyacrylates, enable the board's dried surface to reflect the majority of solar radiation regardless of its angle of incidence. As a result, the product allows for significant reductions in board temperature during exposure to sunlight.

The product may also contain modifying additives such as wettability-enhancing substances, stabilizers and other components described below.

The product's composition may include substances enhancing the board's wettability and adhesion in order to facilitate its installation to building exteriors and the possible application of additional coatings (e.g. glue). The enrichment of the product's composition with 4.0 - 4.3% w/w non-binding dispersion (mentioned above) in the form of a mixture of small-molecule polymer based on acrylic acid ester with molecule size no greater than 50 nm will allow the product to better penetrate the styrofoam board and simultaneously increase the adhesion of the product-coated board.

It is advantageous to simultaneously apply to the surface adhesion-enhancing agents (i.e. a polymer mixture based on acrylic acid ester, styrene and vinylbenzen) and the aforementioned substances increasing light reflection and dissipation coefficients. The reason for this is that a rapid and substantial heating-up of the board causes the water to quickly evaporate, which affects surface adhesion. In many cases, this calls for the use of additional primers. The use of the product according to the invention prevents this from happening by exploiting a synergy effect that occurs when both of the aforementioned measures are applied.

Another optional addition is the functional filler in the form of 3.2 - 3.5% w/w calcinated kaolin. This type of filler is harder than calcium carbonate. It is advantageous to use due to its hardening effect on the coating, which gives the dried product-coated board greater mechanical strength. This is desirable in a situation where product-coated insulation boards according to the invention are to be used as the exterior siding (e.g. when using boards to insulate garages, bus shelters, gazebos, sheds, etc.) or remain exposed for a protracted length of time prior to applying plaster to the walls.

Optionally, the product contains 1.2 -1.8% w/w hydrophobic agents, such as non-ionic emulsions of modified paraffin wax or polysiloxanes. Hydrophobisation is intended to prevent the dried product-coated surface from being penetrated by water which may come into contact with a board with a protective coating. Analogously, the use of hydrophobisation is advantageous when product-coated insulation boards according to the invention are to form the exterior siding of the building.

It is advantageous to enrich the product's composition with a non-ionic rheological additive, advantageously 0.08 - 0.12% w/w polyurethane. A polyurethane thickener increases product viscosity and facilitates application by reducing splash when applying the product to the board.

Another optional component is propylene glycol added in proportions of 0.8 - 1.2% w/w. This component is particularly advantageous when applying the product on the site with a paintbrush or roller. Propylene glycol decreases surface tensions within the product and facilitates even distribution over the board surface.

Where the insulation boards are used according to the invention as the final exterior layer, it is advisable to enrich the product's composition with protective additives such as film biocides. In this variant of the invention, the film biocide contains active substances such as 2-methyl-2H-isothiazol-3-one; zinc pyrithione, 1,2-benzisothiazol 3(2H)-one or terbutaline. The combined content of film biocides amounts to 0.55 - 0.65% w/w.

The homogenized product is then applied to a styrofoam board. Application may take place at the manufacturing stage or on-site. In the latter option, the product may be used to cover only that part of the facade that is exposed to heavy sunlight or heavy moisture (e.g. wall facing north).

The product is recommended for use where styrofoam board surface is at risk of overheating from heavy sunlight and high ambient temperature as well as - in the hydrophobised variant - for coating styrofoam boards intended to remain exposed, i.e. without glue, mesh or plaster, and therefore susceptible to erosion by weather.

The insulation board according to the invention is made from athermal material, particularly from foamed polystyrene, advantageously with graphite and/or soot particles added, wherein at least one side of the board is coated with said coating product according to the invention. Coating thickness should range from 0.1 to 0.5 mm. Applying a thicker layer will have no significant effect on the properties of the insulation board, while also increasing the risk of delamination, particularly where the product is applied at a post-production stage.

The composition of the product applied to an insulation board according to the invention becomes gradually modified as a result of water evaporation and the solidification of the protective coating. Once applied to an insulation board, the product starts to dry. At the initial stage of the drying process, the water solvent evaporates from the product, followed by the coalescents, first by propylene glycol with the lower boiling temperature and then by 2,2,4-trimethyl-1,3-pentanediol monoisobutyrate with the higher boiling temperature. The evaporation of the water and the coalescents starts the reticulation process, by which is meant the formation of a spatial, unbreakable network of polymer chains from the dispersions that make up the product. This network contains an equidistant arrangement of fillers, such as carbonates, titanium white and pigments.

Eventually, once the water has evaporated, the weight percentages of each component of the dry mass of the board's coating are increased in proportion to their percentages in the liquid product. The main component of the surface layer comprised of dry preparation is a calcium carbonate filler, whose percentage is 48.79 - 64.39% w/w. The coating layer will also contain 16.26 - 21.45% w/w bonding dispersion based on acrylic acid ester, styrene and vinylbenzene with average molecule size <0.1 µm.

In this layer, there is also dispersant in proportions of 0.12 - 0.18% w/w. The dry layer also contains 0.58 - 0.82% w/w coalescent; 0.52 - 0.75% w/w reticulating cellulose thickener and 0.09 - 0.74% associative thickener, particularly in the form of acrylic acid ester.

Additionally, the coating may contain 4.07 - 4.79% w/w calcinated kaolin for better structural strength. The coating also contains residual in-can biocide (e.g. 2-methyl-2H-isothiazol-3-one or 1,2-benzisothiazol 3(2H)-one or their mixture) in proportions of 0.74% w/w.

Embodiments of the invention should advantageously have the insulation board with the coating layer containing 5 - 5.65% w/w small-molecule aqueous acrylic polymers with molecule size no more than 50 nm.

The board's dry layer may also contain 6.44 - 10.45% titanium white and/or calcium fillers. The coating may additionally contain 2.84 - 3.53% optical filler, advantageously in the form of a mixture of calcium carbonate and titanium dioxide, as well as 2.32 - 3.22% organic or inorganic pigments (including pigment pastes), e.g. in the form of 1H-isoindolone or 4,10-dibromo-dibenzo[def,mno]chrysene-6,12-dione or 2-[(2-methoxy-4-nitrophenylo)azo]-N-(2-methoxyphenyl)-3-oxybutyramide and/or pigments in the form of diiron trioxide; iron hydroxide, oxide yellow, or in the form of 2-[(2-methoxy-4-nitrophenyl)azo]-N-(2-methoxyphenyl)-3-oxobutyramide or bismuth vanadium tetroxide or a mixture of these pigments.

The dry layer may also contain 1.55 - 2.24% w/w hydrophobic agent in the form of non-ionic emulsions of modified paraffin wax or polysiloxanes.

The dry mass of the insulation board's protective coating according to the invention may also contain 0.7 - 1% w/w film biocide advantageously in the form of 2-methyl-2H-isothiazol-3-one or zinc pyrithione or terbutaline or 2-octyl-2H-isothiazol-3-one or zinc oxide or their mixture.

The coating may contain residual quantities of water no less than 4 - 7% with the assumed seasoning time of 28 days. The presence of residual moisture does not prevent obtaining the full functionality of the product which therefore may be defined as a dry product. The product forms a compact protective layer on the board surface.

An advantageous embodiment involves the cuboid insulation board whose outward-facing side is covered with the coating product that contains sodium polyacrylates for better bonding wettability as well as the aforementioned pigmenting and hydrophobic additives, and whose opposing side, which faces the building wall, is covered with the product according to the invention without pigments or hydrophobic agents. In this variant, the board's inward facing side with the applied glue has very good adhesive properties to facilitate its installation on the wall of a building. On its outward-facing side, the board features an adhesive and reflective layer that protects the board from excessive heat.

The board according to the invention may be covered with the coating product also laterally where it is normally not protected by packing foil. The board may also be covered with the coating product in its entirety. In both of these variants, the boards (especially those containing graphite or soot) will have better strength against sunlight during storage and transport.

The board according to the invention may be covered with one or multiple, advantageously two, layers.

### Example embodiments.

### Example 1

In this embodiment, the coating product contains 37.87% water, 0.06% sodium hexametaphosphate; 1.0% propylene glycol; 0.1% sodium polyacrylate in the form of Dixpex AA4935; 0.1% mixture of fatty acid condensate; 0.4% hydroxyethylcellulose (e.g. Hecellose B30K); 0.04% potassium methyl siliconate; 0.1% polyurethane (Rheovis PU1214); 2.3% optical filler in the form of Pigment FP-460; 40% calcium carbonate; 0.5% coalescent in the form of 2,2,4-Trimethyl-1,3-pentanediol monoisobutyrate; 13.5% bonding dispersion in the form of a mixture of polymers based on acrylic acid ester, styrene and vinylbenzene; 0.48% in-can biocide in the form of 2-methyl-2H-isothiazol-3-one; 0.07% acrylic acid ester (e.g. Rheovis HS 1169); 1.5% modified paraffin wax; 1.98% mixture of: 1H-isoindolone; 4,10-dibromo-dibenzo[def,mno] chrysen-6,12-dione and 2-[(2-methoxy-4-nitrophenyl)azo]-N-(2-methoxyphenyl)-3-oxobutyramide (colour index P.Y. 110, P.R. 168 and P.Y. 74).

### Example 2

In another embodiment of the product, the following components are homogenized: 30.78% water; 0.10% sodium polyacrylate; 0.4% hydroxyethylcellulose; 0.04% potassium metasilicate; 5% titanium white (Biel R996); 39.98% calcium filler (Omyadol 2RO); 3.2% calcinated kaolin; 4% non-bonding dispersion of a polymer based on acrylic acid ester (e.g. OSA AP40); 0.5% 2,2,4-*trimethyl*-1,3-*pentanediol* monoisobutyrate; 13.5% bonding dispersion in the form of polymers based on acrylic acid ester, styrene and vinylbenzene (e.g. Acronal S790); 0.45% in-can biocide in the form of 2-methyl-2H-isothiazol-3-one-pyrithione; 0.07% acrylic acid ester (e.g. Rheovis HS 1169); 1.98 % mixture of: 1H-isoindolone; 4,10-dibromo-dibenzo[def,mno] chrysen-6,12-dione and 2-[(2-methoxy-4-nitrophenyl)azo]-N-(2-methoxyphenyl)-3-oxobutyramide (colour index P.Y. 110, P.R. 168 and P.Y. 74).

In both of the aforementioned embodiments, the components are homogenized into a homogeneous, semi-liquid mass which can be applied mechanically onto the board (e.g. with a roller, paintbrush, by spray-coating or immersion) or by placing the board in a chamber filled with the aerosol (mist) of the coating product.

### Example 3

The insulation board is a solid cuboid fabricated from graphite-containing foamed polystyrene (EPS), with a rectangular base (width 60 cm x thickness 20 cm x height 100 cm). One of the board's walls (60 x 100 cm) and shorter sides (20 x 60 cm) have two layers of the coating product with 0.3 cm total thickness. Residual moisture content following the evaporation of water is approximately 5%. In addition, the coating contains 0.09% sodium hexametaphosphate; 1.49% propylene glycol; 0.15% sodium polyacrylate in the form of Dixpex AA4935; 0.15% mixture of fatty acid condensate; 0.6% hydroxyethylcellulose (e.g Hecellose B30K) ; 0.06% potassium methyl siliconate; 0.15% polyurethane

(Rheovis PU1214); 3.43% optical filler in the form of Pigment FP-460; 6,5% titanium white; 56.73% calcium carbonate; 0.74% coalescent in the form of 2,2,4-trimethyl-1,3-pentanediol monoisobutyrate; 20.11% bonding dispersion in the form of polymers based on acrylic acid ester, styrene and vinylbenzene; 0.72% in-can biocide in the form of 2-methyl-2H-isothiazol-3-one; 0.1% acrylic acid ester (e.g. Rheovis HS 1169); 2% modified paraffin wax; 1.98% mixture of: 1H-isoindolone; 4,10-dibromo-dibenzo[def,mno] chrysen-6,12-dione and 2-[(2-methoxy-4-nitrophenyl)azo]-N-(2-methoxyphenyl)-3-oxobutyramide (colour index P.Y. 110, P.R. 168 and P.Y. 74).

The use of the product on insulation boards ensures good surface adhesion without the need for additional priming agents. At the same time, the board is also weatherproofed, particularly against sunlight and, in its advantageous variant, protected against moisture. In comparison with known insulation boards and associated protective products, the solution according to the invention is characterized by its easy application, meaning that the product may be used to cover the board's outer and lateral surfaces or even the entire board. As mentioned, the product may applied at the manufacturing stage or on the site. The manufacturing of the board according to the invention is cheaper than fabricating extra protective layers.

The main purpose of the invention is the improved adhesion of cement and dispersion glues used for sticking styrofoam boards to the underlying surface and - possibly - to the mesh placed on the exterior of the insulation. Another purpose of this invention is to reduce heat to the board, which is important to dark boards, e.g. ones containing graphite or soot, and furthermore to strengthen the boards against erosion by weather factors, including moisture, mould, fungus and moss. The composition of the present product is consistent with these purposes.

The coating product and insulation boards covered with it are especially recommended for use in the case of a high risk of board surface overheating through exposure to heavy sunlight and high ambient temperatures, as well as for coating styrofoam boards intended to be remain exposed (without glue, mesh or plaster) permanently or for a longer period of time, and therefore at risk from weather erosion.

The invention is designed for use in the construction industry as insulation material for buildings and structures.

## Claims

1. A coating product for insulation boards, particularly those fabricated from foamed polystyrene, containing 18.92 - 41% w/w water; 39 - 44% w/w calcium carbonate; 13 - 15% w/w polymer based on acrylic acid ester, styrene and vinylbenzene with an average molecule size of < 0.1 µm; 0.09 - 0.12% w/w dispersant; 0.45 - 0.55% w/w coalescent; 0.4 - 0.5% w/w cellulose reticulating thickener; 0.4 - 0.6% w/w biocide and 0.07 - 0.1% w/w associative thickener, particularly in the form of acrylic acid ester.

2. The product according to claim 1, **characterized in that** the dispersant is sodium polyacrylate.

3. The product according to claims 1 and 2 **characterized in that** the coalescent is 2,2,4-trimethyl-1,3-pentanediol monoisobutyrate.

4. The product according to one of the above claims **characterized in that** the biocide is 2-methyl-2H-isothiazol-3-one or 2-methyl-2H-isothiazol-3-one or 1,2-benzisothiazol 3(2H)-one or a mixture of these compounds.

5. The product according to any of the above claims, **characterized in that** it contains 5.0 - 7.0% w/w titanium dioxide.

6. The coating product according to any of the above claims, **characterized in that** it contains 0.05 - 0.07% w/w sodium hexametaphosphate.

7. The coating product according to any of the above claims **characterized in that** it contains 0.03 - 0.05% potassium metasilicate.

8. The coating product according to any of the above claims, **characterized in that** it contains 2.2 - 2.5% mixture of calcium carbonate and titanium dioxide.

9. The coating product according to any of the above claims, **characterized in that** it contains 1.95 - 2.0% pigment, particularly in the form of pigmenting pastes.

10. The coating product according to claim 9, **characterized in that** the pigment or a mixture of pigments is one of the following components: 1H-isoindolone; 4,10-dibromo-dibenzo[def,mno] chrysen-6,12-dione or 2-[(2-methoxy-4-nitrophenyl)azo]-N-(2-methoxyphenyl)-3oxobutyramide or diiron trioxide or iron hydroxide oxide yellow or bismuth vanadium tetroxide.

11. The coating product according to claim 9 or 10 **characterized in that** the pigment is indexed at P.Y.110 or P.R.168 or P.Y.74

12. The coating product according to any of the above claims, **characterized in that** it contains 0.08 - 0.12% anti-foaming agent, advantageously in the form of a fatty acid condensate.

13. The coating product according to any of the above claims, **characterized in that** it contains 0.08 - 0.12% non-ionic rheological additive, advantageously in the form of polyurethane.

14. The coating product according to any of the above claims, **characterized in that** it contains 3.2 - 3.5% calcinated kaolin.

15. The coating product according to any of the above claims, **characterized in that** it contains 4.0 - 4.3% non-bonding dispersion, advantageously in the form of a polymer based on acrylic acid ester with molecule size no greater than 50 nm.

16. The coating product according to any of the above claims, **characterized in that** it contains 1.2 -1.8% hydrophobic agent, advantageously in the form of non-ionic emulsion of modified paraffin wax or polyoxylenes.

17. The coating product according to any of the above claims, **characterized in that** it contains 0.8 - 1.2% active hydrophobic agent in the form of propylene glycol.

18. The coating product according to any of the above claims, **characterized in that** it contains 0.55 - 0.65% coating biocide, advantageously in the form of 2-octyl-2H-isothiazol-3-one; terbutaline; zinc pyrithione; zinc oxide or a mixture of these substances.

19. The insulation board fabricated from foamed polystyrene, having at least part of its surface covered with adhesion-enhancing coating, **characterized in that** the coating is composed of at least a single layer of dry product containing 48.79 - 64.39% w/w mineral filler in the form of calcium carbonate; 16.26 - 21.45% w/w polymer based on acrylic acid ester, styrene and vinylbenzene with an average molecule size < 0.1 µm; 0.12 - 0.18% w/w dispersant; 0.58 - 0.82% w/w coalescent; 0.52 - 0.75% w/w reticulating cellulose thickener; 0.09 - 0.74% associative thickener, particularly in the form of acrylic acid ester and up to 0.74% biocide, particularly in the form of 2-methyl-2H-isothiazol-3-one or 1 2-benzisothiazol-3(2h)-one.

20. The board according to claim 19, **characterized in that** the dry product coating contains 6.44 - 10.45% titanium dioxide.

21. The board according to claim 19 or 20, **characterized in that** the dry product coating contains 2.32 - 3.22% pigments in the form of: 1H-isoindolone or 4,10-Dibromo-dibenzo[def,mno]chrysene-6,12-dione or [(2-methoxy-4-nitrophenyl)azo]-N-(2-methoxyphenyl)-3-oxobutyramide or diiron trioxide or iron hydroxide or oxide yellow or bismuth vanadium or a mixture of these pigments.

22. The board according to claim 21, **characterized in that** the pigmenting pastes contained within the dry product coating are indexed at P.Y. 110; P.R.168 and P.Y. 74

23. The board according to any of the above claims, **characterized in that** the dry product coating contains 5.0 - 5.65% non-binding dispersion, advantageously in the form of a mixture of a polymer based on acrylic acid ester with molecule size not greater than 50 nm.

24. The board according to any of the above claims, **characterized in that** the dry product coating contains 2.84 - 3.53% optical filler in the form of a mixture of calcium carbonate or titanium dioxide.

25. The board according to any of the above claims, **characterized in that** the dry product coating contains 4.0 - 4.79% functional filler in the form of calcinated kaolin.

26. The board according to any of the above claims, **characterized in that** the dry product coating contains 1.55 - 2.24% hydrophobic compound, advantageously in the form of a non-ionic emulsion of modified paraffin wax.

27. The board according to any of the above claims, **characterized in that** the dry product coating contains 0.7 - 1% biocide, advantageously in the form of a mixture of 2-octyl-2H-isothiazol-3-one; terbutaline; zinc pyrithione or zinc oxide.
